# FASCICULE DE BREVET EUROPEEN

(11) **EP 1 225 982 B1**
(45) Date de publication et mention de la délivrance du brevet: **05.04.2006**
(21) Numéro de dépôt: 00974652.0
(22) Date de dépôt: 03.11.2000
(51) Int. Cl.: B05B 7/16, A23B 4/30, B05B 7/04

(54) **DISPOSITIF DE PULVERISATION ET SON APPLICATION A UN TUNNEL DE TRAITEMENT BACTERICIDE**
ZERSTÄUBUNGSVORRICHTUNG UND DEREN ANWENDUNG IN EINER TUNNELFÖRMIGEN BEHANDLUNGSKAMMER ZUR BAKTERIZIDEN BEHANDLUNG
SPRAYING DEVICE AND USE THEREOF IN A BACTERICIDAL TREATMENT TUNNEL

(30) Priorité: 05.11.1999 FR 9913922
(43) Date de publication de la demande: 31.07.2002
(73) Titulaire: DANISCO FRANCE, 75017 Paris (FR)
(72) Inventeur: CHERICI, Ernest, F-40180 Yzosse (FR); BONNOT, Dominique, F-78380 Bougival (FR)
(74) Mandataire: Nargolwalla, Cyra
(86) Numéro de dépôt international: PCT/FR2000/003073
(87) Numéro de publication internationale: WO 2001/032315

(56) Documents cités:
- WO-A-90/10503
- US-A- 2 041 001
- US-A- 3 960 523
- US-A- 5 723 184
- US-A- 5 775 122
- US-A- 5 860 598

## Description

La présente invention est relative à un dispositif de pulvérisation d'un agent liquide, notamment d'une solution de phosphate trisodique.

Le document US 2,041,001 décrit un dispositif d'enrobage par pulvérisation de volailles pour la conservation de leurs qualités esthétiques.

L'invention s'applique en particulier au traitement bactéricide de portions de chair comestible, notamment de carcasses d'oiseaux fraîchement abattus, au moyen d'une solution de phosphate trisodique ou TSP.

Le traitement bactéricide précité pose des problèmes environnementaux du fait de la difficulté de maîtriser les rejets d'effluents phosphorés en conformité avec des normes officielles de sévérité croissante.

Afin de résoudre ce problème crucial pour le développement du procédé de traitement, l'invention a pour but de permettre la création dans un tunnel de traitement d'un brouillard de l'agent liquide adapté pour réaliser efficacement le traitement avec des quantités d'agent liquide fortement réduites.

A cet effet, l'invention a pour objet un tunnel de traitement bactéricide d'une succession d'articles, notamment de portions de chair comestible telles que des carcasses d'oiseaux, selon les caractéristiques de la revendication 1.

Selon l'invention, au moins une buse de pulvérisation n'est pas dirigée directement vers les articles.

Un exemple de réalisation de l'invention va maintenant être décrit en regard des dessins annexés, sur lesquels :
- la Figure 1 est une vue schématique en bout d'un tunnel de traitement conforme à l'invention ;
- la Figure 2 est une vue en coupe longitudinale, à plus grande échelle, d'un dispositif de pulvérisation de ce tunnel ;
- les Figures 3, 5 et 7 illustrent schématiquement à plus petite échelle, en vue en bout, la disposition des dispositifs de pulvérisation, respectivement à l'entrée, à mi-longueur et à la sortie du tunnel ; et
- les Figures 4, 6 et 8 sont des vues schématiques partielles en coupe longitudinale qui correspondent respectivement aux Figures 3, 5 et 7.

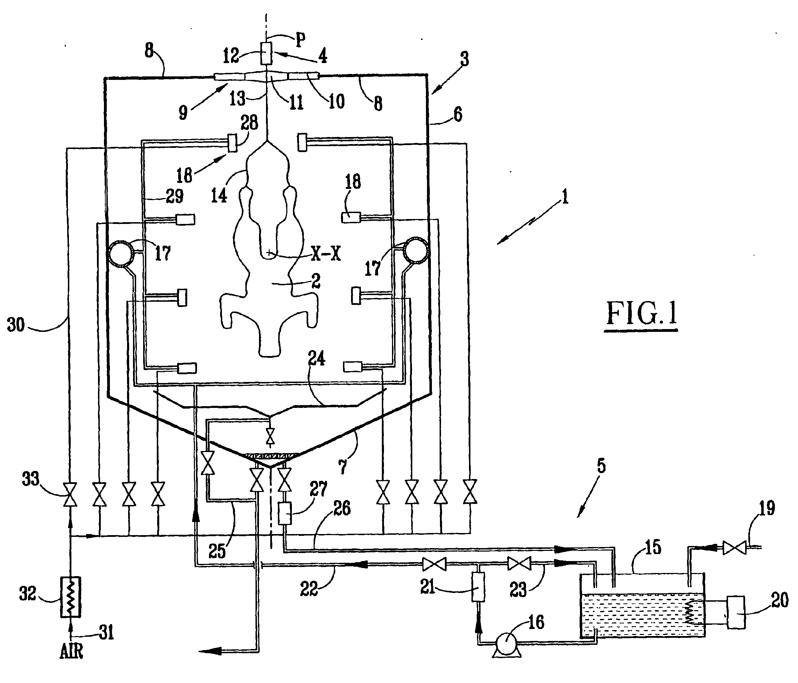

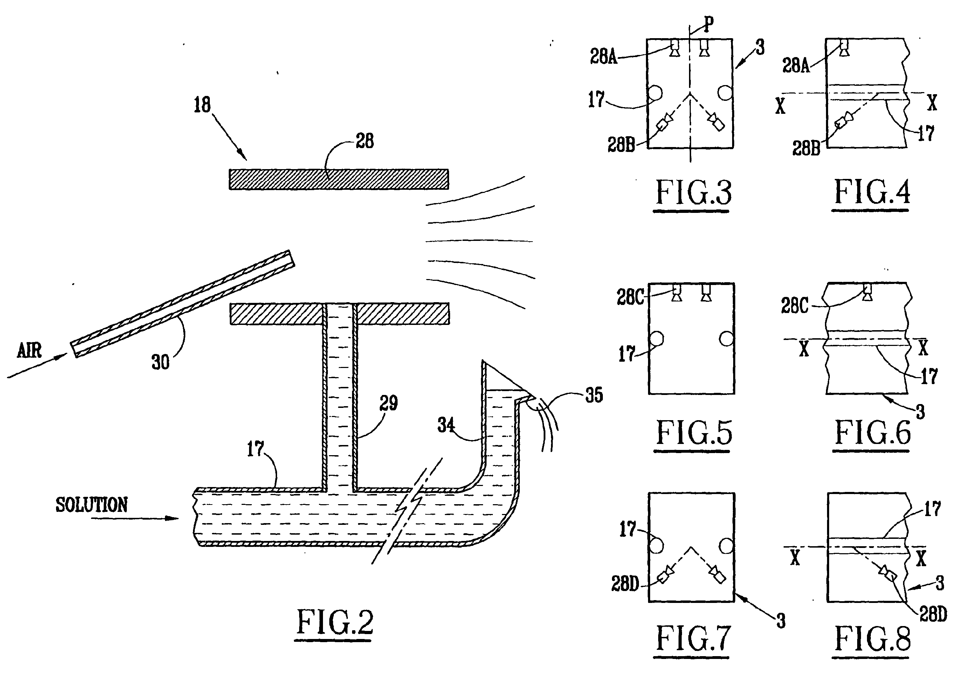

Le tunnel 1 représenté aux Figures 1 et 3 à 8 est destiné au traitement bactéricide en continu de carcasses de volailles 2 au moyen d'une solution de TSP. Il comprend essentiellement une enceinte de traitement 3 de forme allongée, d'axe général X-X horizontal, un convoyeur 4 et des moyens 5 de création d'un brouillard de TSP dans l'enceinte 3.

L'enceinte 3, symétrique par rapport à un plan vertical longitudinal médian P, comprend essentiellement deux parois latérales 6, un fond inférieur 7 en forme de goulotte, et une paroi supérieure 8. Cette dernière comporte une fente longitudinale centrée sur le plan P, équipée d'un dispositif d'étanchéité supérieur 9 qui s'étend sur toute la longueur du tunnel. Ce dispositif 9 comporte, de chaque côté du plan P, une barre horizontale 10 fixée au bord supérieur adjacent de la fente, et une brosse 11 qui part de cette barre en direction du plan P. Les poils des deux brosses 11 sont prévus sur une hauteur substantielle de plusieurs centimètres et s'interpénètrent dans la région du plan P.

Le convoyeur 4 comprend une bande sans fin dont le brin inférieur 12 court juste au-dessus du dispositif 9, dans le plan P. De cette bande pendent des câbles ou des tiges de suspension 13 qui se terminent par des crochets 14 pour les carcasses 2.

Les moyens 5 de création d'un brouillard dans l'enceinte 3 comprennent essentiellement un bac 15 de solution de TSP, une pompe 16, deux nourrices 17 et huit buses de pulvérisation 18.

Le bac 15 est équipé d'une arrivée 19 de solution de TSP d'appoint et d'un dispositif 20 de chauffage de la solution à une température prédéterminée typiquement de l'ordre de 90°C. La pompe 16 aspire au fond du bac et refoule, à travers un filtre à grumeaux 21, dans une conduite 22 d'alimentation des nourrices 17 ou dans une conduite 23 de recyclage de la solution vers le bac. Au-dessus du fond 7 de l'enceinte 3 et sur toute la longueur de celle-ci est disposée une goulotte 24 de collectage de l'effluent du traitement qui goutte des carcasses 2. Du fond de cette goulotte part une conduite 25 d'évacuation de ces effluents vers une station de traitement non représentée.

Les bords longitudinaux de la goulotte 24 sont espacés latéralement des parois latérales 6 de l'enceinte. Par suite, le liquide qui ruisselle sur ces parois coule sur le fond 7 et se rassemble au point bas de celui-ci, d'où une conduite de recyclage 26, équipée d'un filtre à grumeaux 27, s'étend jusqu'au bac 15.

Chaque dispositif de pulvérisation 18 (Figures 1 et 2) comprend une buse tubulaire 28 ouverte à ses deux extrémités ; sensiblement à mi-longueur de cette buse et à son point bas débouche une conduite 29 qui part d'une des deux nourrices 17. De plus, dans chaque buse pénètre une conduite 30 d'air comprimé, qui débouche au voisinage du débouché de la conduite 29 dans la buse.

Le circuit d'air comprimé est schématisé en trait simple sur la Figure 1 ; une conduite d'alimentation commune 31 traverse un réchauffeur 32 puis se divise en autant de conduites 30 qu'il y a de buses 28. Chaque conduite 30 est équipée d'une vanne de réglage 33.

Comme représenté schématiquement sur la Figure 2, chaque nourrice 17 se termine par un tronçon ascendant 34 muni d'un déverseur 35.

Les Figures 3 à 8 illustrent un exemple d'implantation des buses 28 :
- les nourrices 17 sont des tubes horizontaux disposés le long des parois 6 de l'enceinte, sensiblement au niveau de l'axe central X-X de l'enceinte ;
- à l'entrée de l'enceinte 3 (Figures 3 et 4), il est prévu :
   . d'une part, deux buses supérieures 28A dirigées sensiblement verticalement vers le bas, de part et d'autre du plan P et a un écartement correspondant sensiblement à la largeur des carcasses 2;
   . d'autre part, deux buses inférieures 28B orientées à 45° aussi bien en vue en bout (Figure 3) qu'en vue latérale (Figure 4), de sorte que les axes des deux buses se coupent sur l'axe X-X, à l'intérieur de l'enceinte et à une certaine distance de l'entrée de celle-ci;
- à peu près à mi-longueur de l'enceinte 3, il est prévu deux buses supérieures 28C disposées comme les buses 28A ; et
- à la sortie de l'enceinte, il est prévu deux buses inférieures 28D disposées comme les buses 28B, mais, en vue latérale (Figure 8), orientées vers l'intérieur de l'enceinte.

L'installation décrite ci-dessus comporte par ailleurs des moyens classiques et non représentés de commande et de régulation.

En fonctionnement, l'air comprimé, chauffé vers 85°C en 32, aspire dans chaque buse 28, par effet venturi, de la solution de TSP arrivant dans la buse par la conduite 29 associée. Les nourrices 17 étant maintenues en permanence sous charge constante grâce au déverseur 35, on obtient facilement, par simple réglage des vannes 33, le débit de solution désirée à la sortie de chaque buse 28.

La solution de TSP sort de chaque buse 28 sous forme d'un brouillard dont les gouttelettes ont un diamètre de l'ordre de 0,05 mm, et les flux d'air vecteur provoquent une turbulence de l'atmosphère intérieure de l'enceinte 3. De cette manière, on obtient un traitement satisfaisant des carcasses 2, aussi bien sur leur surface extérieure qu'à l'intérieur de leur trou d'éviscération, avec un débit de solution particulièrement faible. Ceci permet de réduire de façon correspondante le débit d'effluents phosphorés de l'installation, d'autant plus que seule la solution qui a effectivement atteint les carcasses et qui n'est pas entraînée par celles-ci est évacuée via la goulotte 24 et la conduite 25.

Il est à noter que le chauffage de la solution dans le bac 15 permet d'optimiser le traitement bactéricide, et que le chauffage de l'air comprimé de pulvérisation contrebalance le refroidissement qui résulte de la détente au passage des buses. Au total, les gouttelettes de TSP atteignent les carcasses à une température d'environ 70°C.

De plus, la structure des buses 28 les rend pratiquement impossibles à obstruer, et la faible dimension des gouttelettes produites présente le double avantage d'une part de ne pas risquer de déchirement de la peau des volailles lors de l'impact, d'autre part de ne pas provoquer de début de cuisson de cette peau.

D'autres agencements des buses 28 dans l'enceinte 3 peuvent être adoptés, certaines des buses pouvant ne pas être orientées directement vers les carcasses 2. Ceci a été schématisé sur la Figure 1 pour les quatre buses inférieures.

## Revendications

1. Tunnel de traitement bactéricide d'une succession de portions de chair comestible (2) telles que des carcasses d'oiseaux, comprenant une enceinte de traitement (3) et au moins un dispositif de pulvérisation (18) d'un agent liquide, notamment d'une solution de phosphate trisodique, **caractérisé en ce que** ledit dispositif de pulvérisation comprend :
- une buse tubulaire (28) ouverte à ses deux extrémités, dirigée vers l'intérieur de l'enceinte (3) ;
- une réserve de solution (17) ;
- une conduite d'alimentation (29) qui part de la réserve et qui aboutit dans la partie inférieure de la buse ; et
- une conduite (30) de gaz vecteur comprimé, notamment d'air comprimé, qui débouche dans la buse au voisinage du débouché de la conduite d'alimentation,
où au moins une buse (28) n'est pas dirigée directement vers les portions de chair comestible (2) ; et
où l'agent liquide sort de chaque buse (28) sous forme d'un brouillard dont les gouttelettes ont un diamètre de l'ordre de 0,05 mm.

2. Tunnel suivant la revendication 1, **caractérisé en ce que** le dispositif de pulvérisation (18) comprend au moins deux ensembles (18) buse tubulaire-conduite d'alimentation-conduite d'air comprimé, et une réserve de solution commune (17) pour ces ensembles.

3. Tunnel suivant la revendication 1 ou 2, **caractérisé en ce que** le dispositif de pulvérisation (18) comprend des moyens (16, 22) d'alimentation de la réserve (17) avec un excès de liquide à pulvériser, la réserve comportant un déversoir (35).

4. Tunnel suivant la revendication 3, **caractérisé en ce que** la réserve (17) a la forme d'une conduite mise sous charge en permanence par le déversoir (35).

5. Tunnel suivant l'une quelconque des revendications précédentes, **caractérisé en ce que** le dispositif de pulvérisation (18) comporte des moyens de chauffage (20) de l'agent liquide contenu dans la réserve (17).

6. Tunnel suivant l'une quelconque des revendications précédentes, **caractérisé en ce qu'**il comporte des moyens de chauffage (32) du gaz vecteur.

## Patentansprüche

1. Tunnel zur bakteriziden Behandlung einer Abfolge von Stücken essbaren Fleisches (2), z.B. Geflügelschlachtkörper, der einen Behandlungsbereich (3) und mindestens eine Vorrichtung (18) zur Zerstäubung eines flüssigen Mittels, insbesondere einer Trinatriumphosphatlösung, aufweist, **dadurch gekennzeichnet, dass** die genannte Zerstäubungsvorrichtung Folgendes aufweist:
- eine an ihren beiden Enden offene, röhrenförmige Düse (28), die in das Innere des Bereichs (3) gerichtet ist
- einen Lösungsvorrat (17)
- eine Zuleitung (29), die am Vorrat beginnt und am unteren Teil der Düse endet; und
- eine Leitung (30) für verdichtetes Trägergas, insbesondere Druckluft, die in der Düse in der Nähe der Zuleitungsmündung mündet,
wobei mindestens eine Düse (28) nicht direkt auf die Stücke essbaren Fleisches (2) gerichtet ist; und
wobei das flüssige Mittel aus jeder Düse (28) in Form eines Nebels ausströmt, dessen Tröpfchen einen Durchmesser von ca. 0,05 mm besitzen.

2. Tunnel nach Anspruch 1, **dadurch gekennzeichnet, dass** die Zerstäubungsvorrichtung (18) mindestens zwei Baugruppen (18) aus röhrenförmiger Düse, Zuleitung und Druckluftleitung sowie einen gemeinsamen Lösungsvorrat (17) für diese Baugruppen aufweist.

3. Tunnel nach Anspruch 1 oder 2, **dadurch gekennzeichnet, dass** die Zerstäubungsvorrichtung (18) Mittel (16, 22) zum Befüllen des Vorrats (17) mit überschüssiger zu zerstäubender Flüssigkeit und die Reserve einen Überlauf (35) aufweist.

4. Tunnel nach Anspruch 3, **dadurch gekennzeichnet, dass** der Vorrat (17) die Form einer permanent durch den Überlauf (35) gefüllten Leitung besitzt.

5. Tunnel nach einem der vorangehenden Ansprüche, **dadurch gekennzeichnet, dass** die Zerstäubungsvorrichtung (18) Mittel zum Erwärmen (20) des im Vorrat (17) enthaltenen flüssigen Mittels aufweist.

6. Tunnel nach einem der vorangehenden Ansprüche, **dadurch gekennzeichnet, dass** er Mittel zum Erwärmen (32) des Trägergases aufweist.

## Claims

1. A tunnel for the bactericidal treatment of a succession of portions of edible meat (2) such as poultry carcasses, comprising a treatment chamber (3) and at least one device (18) for spraying a liquid agent, in particular a trisodium phosphate solution, **characterized in that** said spray device comprises:
• a tubular nozzle (28) which is open at both of its ends, directed towards the interior of the chamber (3);
• a reservoir of solution (17);
• a supply line (29) which charges from the reservoir and opens into the lower portion of the nozzle; and
• a line (30) for compressed vector gas, in particular compressed air, which opens into the nozzle close to the supply line outlet;
in which at least one nozzle (28) is not directed directly towards the portions of edible meat (2); and
in which the liquid agent leaves each nozzle (28) in the form of a mist with droplets having a diameter of the order of 0.05 mm.

2. A tunnel according to claim 1, **characterized in that** the spray device (18) comprises at least two tubular nozzle - supply line - compressed air line assemblies (18), and a common reservoir of solution (17) for said assemblies.

3. A tunnel according to claim 1 or claim 2, **characterized in that** the spray device (18) comprises means (16, 22) for supplying the reservoir (17) with an excess of spray liquid, the reservoir comprising a spout (35).

4. A tunnel according to claim 3, **characterized in that** the reservoir (17) is in the form of a line which is permanently charged via the spout (35).

5. A tunnel according to any one of the preceding claims, **characterized in that** the spray device (18) comprises means (20) for heating the liquid agent contained in the reservoir (17).

6. A tunnel according to any one of the preceding claims, **characterized in that** it comprises means (32) for heating the vector gas.
